# EUROPEAN PATENT SPECIFICATION

(11) **EP 0 642 234 B1**
(45) Date of publication and mention of the grant of the patent: **08.01.2003**
(21) Application number: 94907673.1
(22) Date of filing: 24.02.1994
(51) Int. Cl.: H04B 7/26

(54) **METHOD OF SELECTIVE RADIO PAGING, AND RECEIVER FOR RADIO PAGING**
VERFAHREN ZUR SELEKTIVEN PERSONSUCHE PER FUNK, UND EMPFÄNGER FÜR FERNRUF
PROCEDE DE RADIORECHERCHE SELECTIVE DE PERSONNE, ET RECEPTEUR DE TELEAPPEL

(30) Priority: 25.02.1993 JP 3696393
(43) Date of publication of application: 08.03.1995
(73) Proprietor: NTT MOBILE COMMUNICATIONS NETWORK INC., Minato-ku, Tokyo 105-8436 (JP)
(72) Inventor: ITO, Shogo, Yokohama-shi, Kanagawa 235 (JP); HIRAI, Yoshiaki, Urawa-shi, Saitama 336 (JP); NANBA, Nobuyuki, Hiroshima-shi, Hiroshima 733 (JP); NOZAWA, Toshihiro, Iida-shi, Nagano 395-01 (JP)
(74) Representative: Skone James, Robert Edmund
(86) International application number: JP9400289
(87) International publication number: WO94019879

(56) References cited:
- WO-A-86/03317
- JP-A- 2 044 821
- JP-A- 57 041 044
- US-A- 5 150 110

## Description

### Technical Field

This invention is utilized for the paging of mobile units in a mobile radio communication system. It relates in particular to technology for reducing the time that power is being consumed by the batteries of a mobile unit ― in other words, to battery saving ― and it is particularly suited to being utilized in selective radio paging systems.

### Background Technology

In a mobile radio communication system that uses portable mobile units, it is essential for at least those functions in the mobile unit which operate in response to a call to be kept constantly operational, so that a mobile unit can be paged at any time. However, because mobiles are portable, the capacity of the batteries can be increased only so far, and battery saving has therefore been practised for some time. This battery saving will now be explained for the example of a selective radio paging system.

A selective radio paging system employs radio waves to selectively call a moving individual. A subscriber who intends to receive this service will always carry a pager. This pager operates on a built-in battery, and the pager circuits must be constantly powered while the subscriber is out and about, so that he or she can always be called. Battery saving has therefore been practised for some time in order to make batteries of limited capacity last as long as possible.

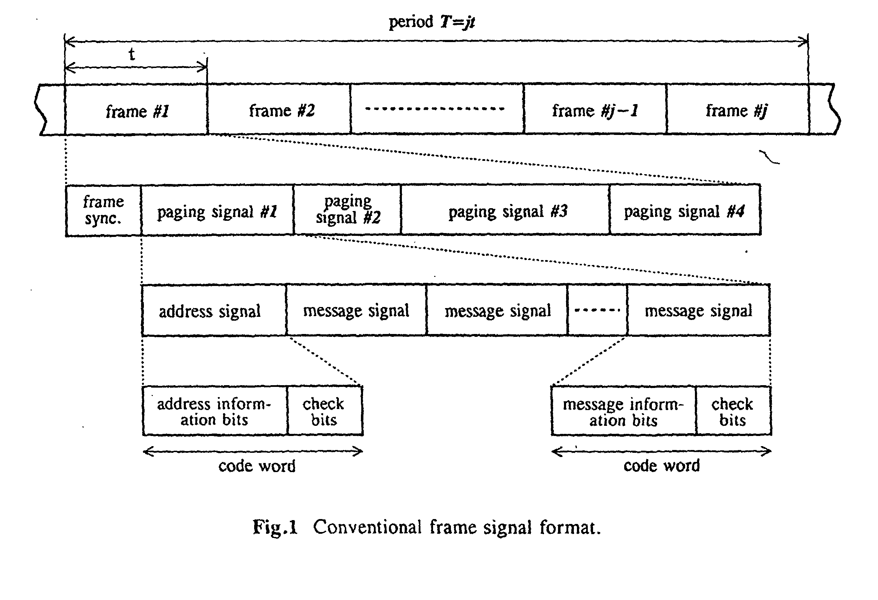

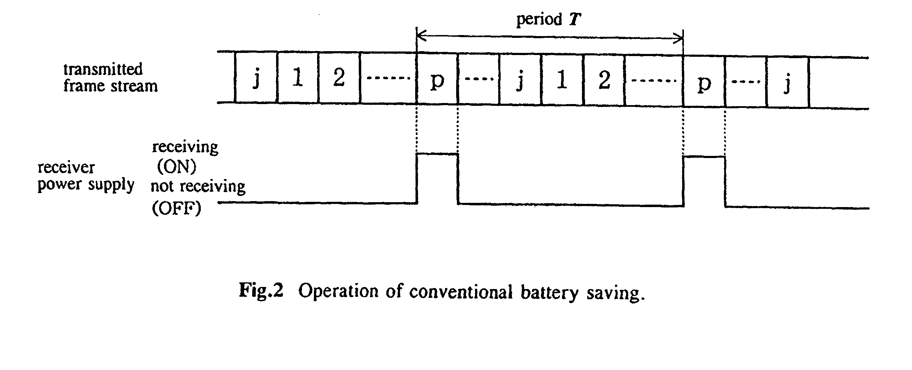

A conventionally used battery saving method will be explained with reference to **Fig.1** and **Fig.2**. **Fig.1** shows a conventional signal format, and **Fig.2** shows the operation of conventional battery saving. As shown in **Fig.1**, the signal transmitted from a base station consists of signals of period ***T=jt*** which comprise ***j*** frames of signal length ***t*** connected together. Each frame comprises a frame synchronization signal and a plurality of paging signals of arbitrary length for selectively calling pagers which have been set to receive this frame. The paging signals comprise an address signal and, connected to this, message signals. The address signal is constituted by adding check bits to address information bits, and the message signals are constituted by adding check bits to message information bits. The smallest unit including added check bits is called a "code word". In the example depicted in **Fig.1**, the address signal and the message signals each constitute a single code word. It is also feasible for the address signal and the message signals each to comprise a plurality of code words. The pagers are divided into ***j*** groups, and pagers that belong to group ***p (1 ≤p ≤j)*** perform battery saving by carrying out intermittent reception, whereby, as shown in **Fig.2,** said pagers are in a receiving state only during the group ***p*** reception time (this will be described by saying that the pagers have been assigned to group ***p***).

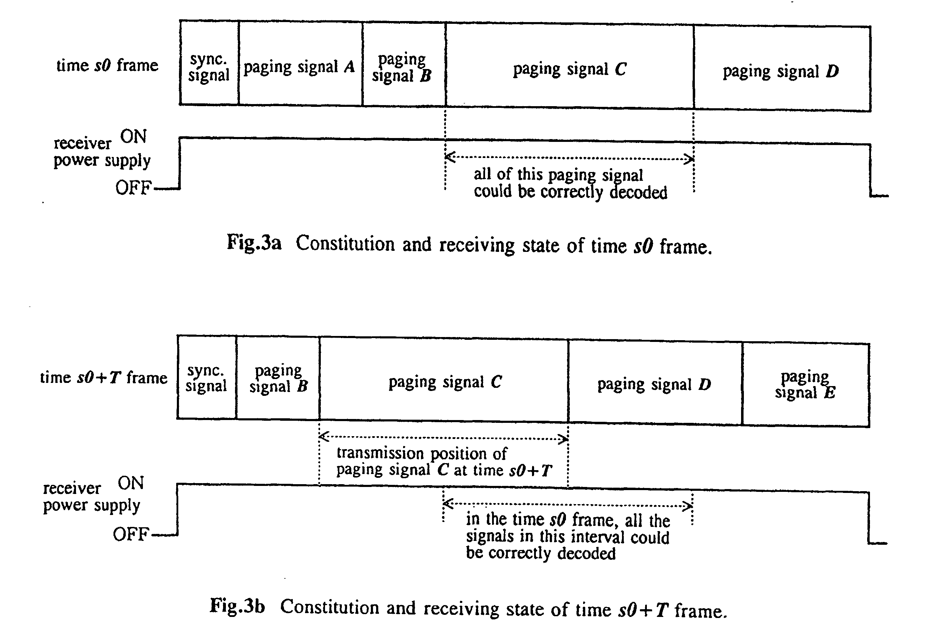

**Fig.3a** and **3b** show an example of a conventional frame constitution plus the timing of the reception battery saving, in the case where identical paging signals are transmitted ***n*** times from a base station. It will be assumed that a pager which has been assigned to group ***p*** receives first of all the frame sent from the base station at time ***s0*** (this will hereinafter be termed the "time ***s0*** frame"), and next receives the frame sent at time ***s0+T*** (likewise, this will be termed the "time ***s0+T*** frame"). **Fig.3a** shows the time ***s0*** frame and receiving state, while **Fig.3b** shows the corresponding time ***s0+T*** frame and receiving state. In the example illustrated here, four paging signals ***A, B, C*** and ***D*** of different lengths are contained in the time ***s0*** frame. These paging signals have been transmitted different numbers of times, and it is assumed here that paging signal ***A*** is being transmitted for the ***n***^{***th***} time, paging signal ***B*** for the ***m***^{***th***} time (***m<n***), paging signal ***C*** for the ***h***^{***th***} time (***h<m<n***), and paging signal ***D*** for the first time. If the time ***s0*** frame is constituted in this manner, then the ***n*** transmissions of paging signal ***A*** are completed in this time ***s0*** frame, and so paging signal ***A*** will not be transmitted in the time ***s0+T*** frame. Furthermore, in this time ***s0+T*** frame, paging signals ***B, C*** and ***D*** are shifted to the left to fill the resulting gap, and a new paging signal ***E*** is transmitted following paging signals ***B*, *C and D.***

Now, let it be assumed that a receiver has received the entire signal in the time ***s0*** frame, and that all the code words which comprise paging signal ***C*** have been correctly decoded. In this case, although the contents of paging signal ***C*** are known and it is therefore unnecessary to receive paging signal ***C*** in subsequent frames, at the following time ***s0+T*** frame, the position of paging signal ***C*** cannot be predicted and so the entire frame signal including paging signal ***C*** will be received. Reception of paging signal ***C*** in the time ***s0+ T*** frame therefore results in unnecessary consumption of power. In other words, with a signal format of this kind, because the position of a paging signal within the frame signal in each transmission period is indeterminate, efficient battery saving cannot be carried out.

The purpose of the present invention is to overcome this problem and to provide a mobile radio communication system in which efficient battery saving can be performed at the receivers.

### Disclosure of the Invention

A mobile radio communication system according to this invention is characterised in that, in a mobile radio communication system which has a plurality of receivers to each of which an address has been assigned, and a base station which transmits a paging signal ***n*** times (where ***n*** is a predetermined integer equal to or greater than 2) to a receiver which is to be called, said paging signal containing address information corresponding to that receiver, and wherein check bits for error detection or correction are added to the paging signals, and receivers have a means which uses the check bits contained in the received paging signals to perform error detection or correction of those paging signals: the position of a paging signal that is transmitted for the second or subsequent time is determined, in accordance with a prearranged rule, in relation to the position of the same paging signal when it was transmitted for the first time; and the receivers include a means which, in respect of signal portions that have been confirmed as having been received without error, stops the receiving operation of the receiver with a timing corresponding to identical signal portions of the same repeatedly received paging signal.

The unit of transmission from the base station is a frame containing one or more paging signals; identical paging signals are transmitted repeatedly by means of ***n*** frames; and the position of the identical paging signals within the frames can be determined by means of a prearranged rule.

The signal format disclosed in Jap. Pat. Appl. No. 5-12822 (not yet published when this application was filed) can be used as a signal format in which the position of paging signals is determined in a systematic way. Each frame will then be composed of ***n*** fixed-length subframes, and one or more new paging signals are inserted into the first subframe of a frame, while paging signals which are being transmitted for the ***m***^{***th***} time are inserted into the ***m***^{***th***} subframe of the frame. Given this format, the position of the subframe which contains the same paging signals will change regularly with each frame, and its timing can be predicted at the receiver.

When a signal format of this kind is used, the means which stops the receiving operation may perform battery saving in subframe units or in paging signal units within a subframe. Alternatively, it may perform battery saving in smaller units: for example, the unit may be the smallest code word for which error detection or correction can be carried out by means of a series of check bits.

More specific explanations will now be given. To perform battery saving in subframe units, when it has been confirmed that the signal of the ***i***^{***th***} subframe in a given frame has been received without error in that frame or in a previous frame, reception is stopped for the ***i+1***^{***th***} subframe in the next frame. To perform battery saving in paging signal units, when it has been confirmed that a certain paging signal of the ***i***^{***th***} subframe in a given frame has been received without error in that frame or in a previous frame, reception is stopped for the signal at the same position in the ***i+1***^{***th***} subframe in the next frame. To perform battery saving where the unit is the smallest code word for which error detection or correction can be carried out by means of a series of check bits, when it has been confirmed that a certain code word of the ***i***^{***th***} subframe in a given frame has been received without error in that frame or in a previous frame, reception is stopped for the signal at the same position in the ***i***+***1***^{***th***} subframe in the next frame.

Although the subframes are of fixed length, the paging signals that are inserted into them may be of different lengths. For example, in the case of a selective radio paging system, variable-length message information may be contained in the paging signals. Under such circumstances, the position of the paging signals in a subframe will not be regular, but the paging signals will be in identical positions in corresponding subframes, and their positions can be easily predicted at the receiver side.

It is also feasible to reverse the order of the subframes, in which case new paging signals are inserted in the ***n***^{***th***} subframe and paging signals which are being transmitted for the ***n***^{***th***} time are inserted in the first subframe. However, given the need to synchronize frame reception, it is desirable to be sure of receiving the first signal of a frame, and therefore desirable for new paging signals to be inserted in the first subframe.

The position of the paging signals can also be fixed from one frame to the next. That is to say, a frame with an identical arrangement of paging signals can be transmitted ***n*** times. In this case as well, battery saving can be performed in frame units, paging signal units, or code word units.

The receiver used in a mobile radio communication system of this sort has a number storage means which stores the address assigned to that receiver; a receiving means which receives the paging signals which the base station transmits ***n*** times (where ***n*** is a predetermined integer equal to or greater than 2); a means which uses the check bits contained in the received paging signals to perform error detection or correction of those paging signals; and a means which performs call processing when the address information contained in a received paging signal matches the address that has been stored in the number storage means; and is characterised in that the position of a paging signal that is received for the second or subsequent time can be predicted from the position of the same paging signal when it was received for the first time; and in that it has a means which, in respect of signal portions that have been confirmed as having been received without error, stops the receiving operation of the receiver with a timing corresponding to identical signal portions of the same repeatedly received paging signal.

This invention is particularly suited to utilization in selective radio paging systems, and can be utilized in similar fashion in the paging of receivers in other mobile radio communication systems: for example, in the paging of portable telephones.

### Brief Explanation of the Drawings

Fig.1 shows a conventional frame signal format.

Fig.2 shows the operation of conventional battery saving.

Figs.3a and 3b show an example of a conventional frame constitution plus the timing of the reception battery saving, in the case where identical paging signals are transmitted ***n*** times from a base station. Fig.3a shows the time ***s0*** frame and receiving state, while Fig.3b shows the corresponding time ***s0***+***T*** frame and receiving state.

Fig.4 is a block diagram showing a selective radio paging system according to an embodiment of this invention.

Figs.5a and 5b show an example of a frame signal format which is suited to implementing this invention. Fig.5a shows the constitution of the time ***s0*** frame, while Fig.5b shows the constitution of the time ***s0***+***T*** frame.

Fig.6 is a flowchart showing the receiving operation when battery saving is performed in subframe units.

Figs.7a, 7b and 7c show the relation between frame constitution and receiving state at times ***s0*, *s0+ T*** and ***s0*+*2T***, respectively.

Fig.8 is a flowchart showing the receiving operation when battery saving is performed in paging signal units.

Figs.9a, 9b and 9c show the relation between frame constitution and receiving state at times ***s0*, *s0*+*T*** and ***s0*+*2T,*** respectively.

Fig.10 is a flowchart showing the receiving operation when battery saving is performed in code word units.

Figs.11a, 11b and 11c show the relation between frame constitution and receiving state at times ***s0, s0+T*** and ***s0+2T,*** respectively.

Figs.12a and 12b show another example of a frame constitution which is suited to implementing this invention. Fig. 12a shows the constitution of the time ***s0+mT*** frame, while Fig.12b shows the constitution of the time ***s0+(m+1)T*** frame.

### Optimum Configuration for Embodying this Invention

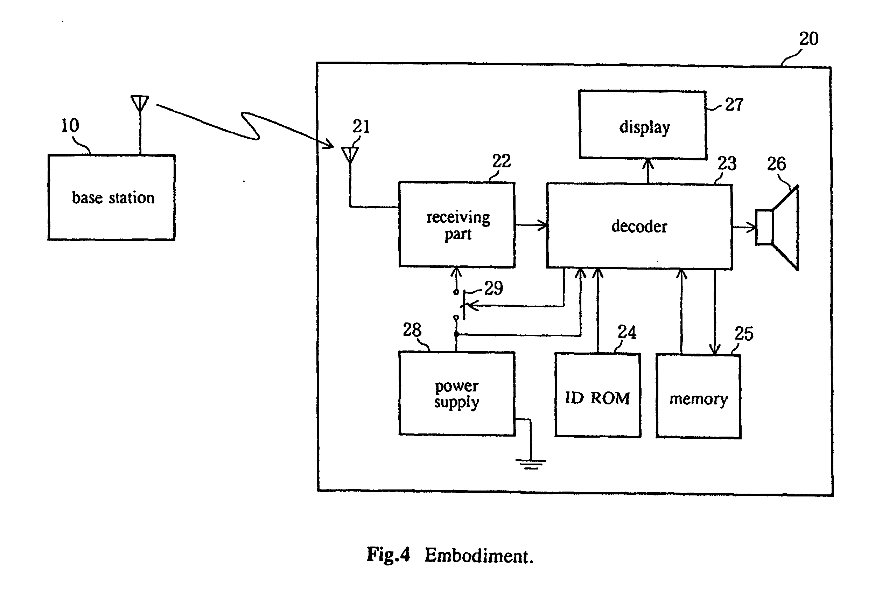

The constitution of an embodiment of this invention will be explained with reference to **Fig.4.** This embodiment has pagers 20 (only one is illustrated in the drawing) which serve as a plurality of receivers to each of which an address has been assigned. It also has base station 10 which transmits a paging signal ***n*** times (where ***n*** is a predetermined integer equal to or greater than 2) to a receiver which is to be called, said paging signal containing address information corresponding to that receiver. Check bits for carrying out error detection or correction are added to the paging signals, and pagers 20 are equipped with decoder 23 as a means which uses the check bits contained in the received paging signals to perform error detection or correction of those paging signals.

Pager 20 is also provided with antenna 21, receiving part 22, ID ROM 24, memory 25, speaker 26, display 27, power supply 28 and battery saving switch 29. Antenna 21 and receiving part 22 receive frames which base station 10 transmits. ID ROM 24 stores the address that has been assigned to this pager. Memory 25 stores received paging signals. Decoder 23 not only performs error detection or correction of received signals, but also carries out call processing when the address information in a paging signal contained in the received frame matches the address stored in ID ROM 24. Namely, an alert signal is sent to speaker 26 and, if the message information following the address information could be correctly decoded, the message is displayed by display 27. A liquid crystal display device may be used as display 27.

The distinguishing features of this embodiment are as follows. Namely, the position of a paging signal that is transmitted for the second or subsequent time is determined, in accordance with a prearranged rule, in relation to the position of the same paging signal when it was transmitted for the first time; and, in respect of signal portions that have been confirmed as having been received without error, pager 20 stops the receiving operation of receiving part 22 by opening battery saving switch 29 with a timing corresponding to identical signal portions of the same repeatedly received paging signal.

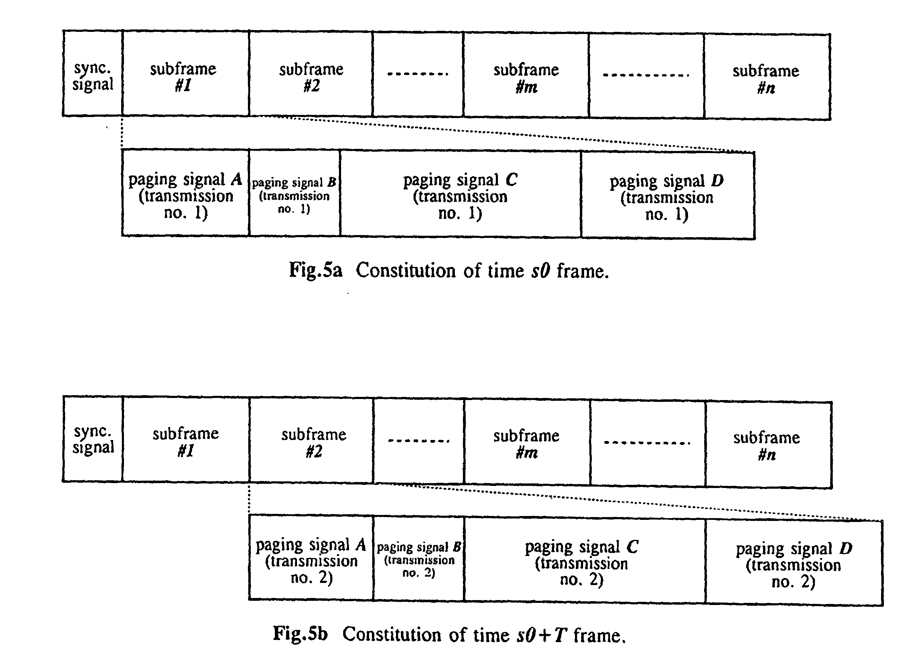

**Figs.5a** and **5b** show an example of a frame signal format that is suited to implementing this invention. It is assumed here that a pager which has been assigned to group ***p*** first of all receives the time ***s0*** frame and next receives the time ***s0+T*** frame. **Fig.5a** shows the constitution of the time ***s0*** frame, while **Fig.5b** shows the constitution of the time ***s0*+*T*** frame.

Frames transmitted from base station 10 are internally constituted of a frame synchronization signal followed by ***n*** fixed-length subframes, and one or more new paging signals are inserted in the first subframe, while paging signals that are being transmitted for the ***m***^{***th***} time are inserted in the ***m***^{***th***} subframe. The position of a given set of paging signals will shift by one subframe every frame. Referring to the example depicted in **Figs.5a** and **5b,** if paging signals ***A, B, C*** and ***D*** have been inserted in the first subframe of the time ***s0*** frame, then, in the time ***s0*+*T*** frame, these paging signals ***A, B, C*** and ***D*** will be inserted in the second subframe, and in the time ***s0+(k-1)T*** frame (where ***k*=1, ..., *n*),** they will be inserted in the ***k***^{***th***} subframe. Transmission for the ***n***^{***th***} time is therefore completed in the time ***s0+(n-1)T*** frame. In other words, the position of the paging signals in the frame in each transmission period changes in a regular manner, so that a paging signal that is being transmitted for the second or subsequent time can have its position predicted at the receiver side. Redundant signals are therefore not received, and efficient battery saving can be carried out.

Subframes, paging signals or code words can be used as the units in which battery saving is performed in pager 20. A detailed explanation will now be given for each of these cases.

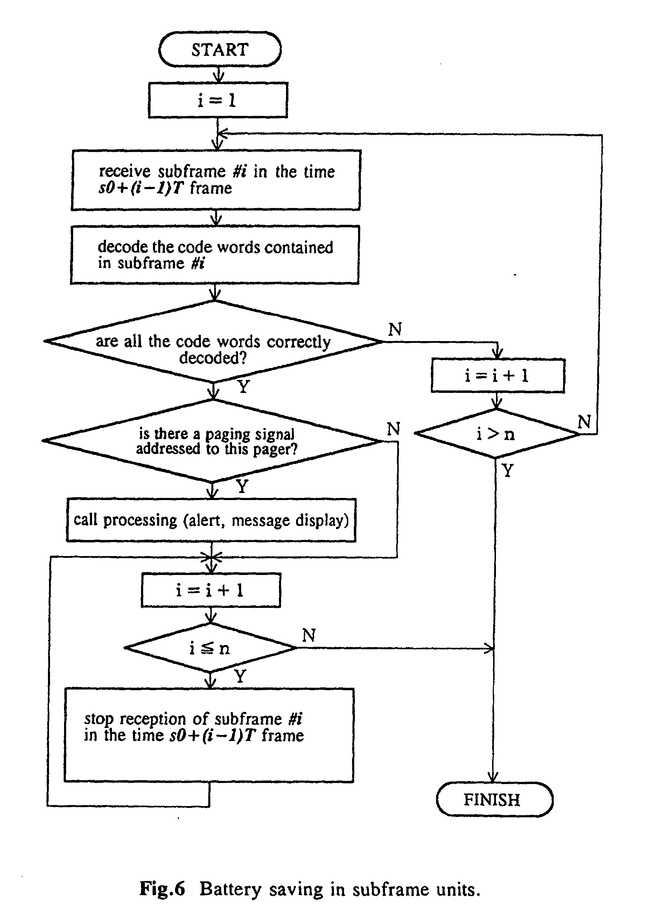

**Fig.6** is a flowchart showing the receiving operation when battery saving is performed in subframe units. When the first subframe in the time ***s0*** frame is received following the frame synchronization signal, decoder 23 decodes the code words contained in this subframe. If there are code words which cannot be correctly decoded, the second subframe is received in the next frame and its code words are decoded. This is repeated, and when there has been a paging signal where it has been possible to decode all the code words correctly and which was addressed to the pager in question, call processing (involving sending an alert signal and displaying a message) will be carried out. When it has been possible to decode correctly all the code words of a subframe, the reception of corresponding subframes in subsequent frames is stopped.

The foregoing explanation- focused on the paging signals that were inserted in the first subframe of the time ***s0*** frame, but the same applies to each frame in which a subframe has been assigned to the group to which this pager belongs. Namely, the paging signals that are inserted in its first subframe are taken as the starting point and subsequent receiving operations are controlled on this basis. In each frame, therefore, after the first subframe has been completely received, battery saving operation relating to the paging signals in said first subframe is started, and reception of the second and subsequent subframes is performed on the basis of the reception result of previous frames.

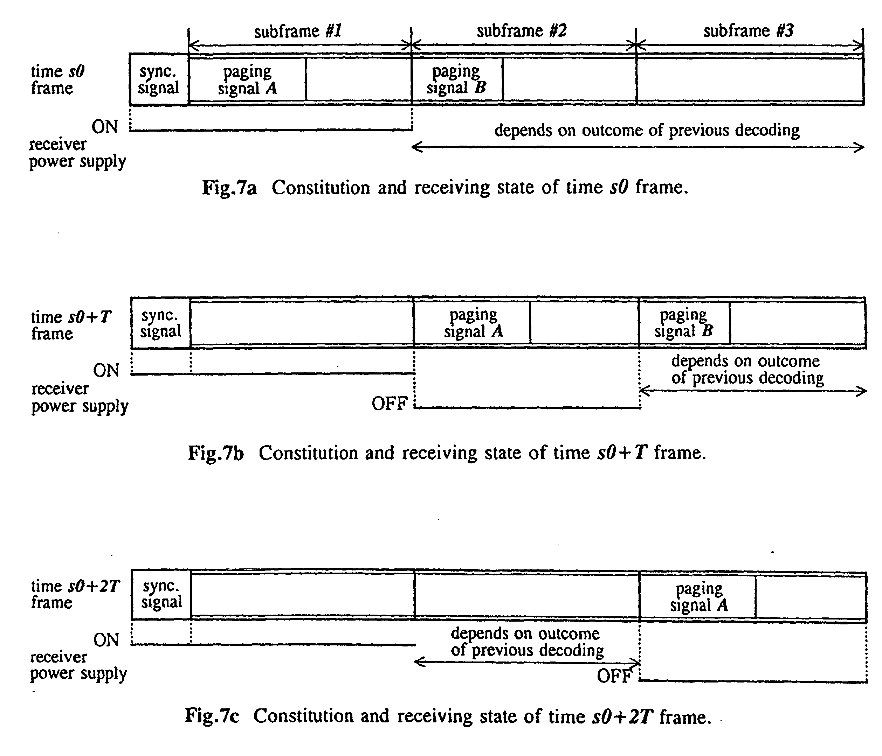

**Figs.7a, 7b** and **7c** respectively show the relation between receiving state and the constitution of the time ***s0, s0+T*** and ***s0*+*2T*** frames which a single receiver receives with a period ***T,*** for the case where an identical paging signal is transmitted three times: in other words, for the case where ***n*=3.**

In this example, in the time ***s0*** frame, paging signal ***A,*** which is being transmitted for the first time, is inserted in the first subframe, while paging signal ***B*,** which is being transmitted for the second time, is inserted in the second subframe. The time ***s0*+*T*** frame, which is transmitted in the following transmission period, has a new paging signal inserted in its first subframe, while the paging signal that was transmitted in the first subframe at time ***s0*** is inserted in its second subframe and the paging signal that was transmitted in the second subframe at time ***s0*** is inserted in its third subframe. At time ***s0*+*2T***, which is the following transmission period, the signal which is being newly transmitted for the first time is inserted in the first subframe and the paging signal that was transmitted in the first subframe at time ***s0+T*** is inserted in the second subframe, while the paging signal that was transmitted in the second subframe at time ***s0*+*T*** is inserted in the third subframe.

The pager receives the first subframe in the time ***s0*** frame. The explanation given here will focus on subframes in which paging signal A has been inserted. If all the code words contained in the first subframe are correctly decoded and a paging signal addressed to the pager in question is contained in this subframe, the pager will perform call processing, such as sending an alert signal and displaying a message. If all the code words of the first subframe were correctly decoded in the time ***s0*** frame, a synchronization signal for maintaining synchronization is received for the time ***s0*+*T*** frame, and the first subframe of said time ***s0*+*T*** frame is received. However, because it was possible to recognize all the signals of the first subframe in the time ***s0*** frame, it is not necessary to receive the second subframe of the time ***s0*+*T*** frame. Likewise, it is not necessary to receive the signals of the third subframe of the time ***s0*+*2T*** frame. Accordingly, once decoding has been carried out correctly, it is not necessary to decode the same signal again, as was previously required, with the result that unnecessary consumption of power is avoided. In this example, consumption of power for receiving subframes #2 and #3 in the time ***s0*** frame, subframe #3 in the time ***s0*+*T*** frame, and subframe #2 in the time ***s0*+*2T*** frame, is dependent on the outcome of previous decoding.

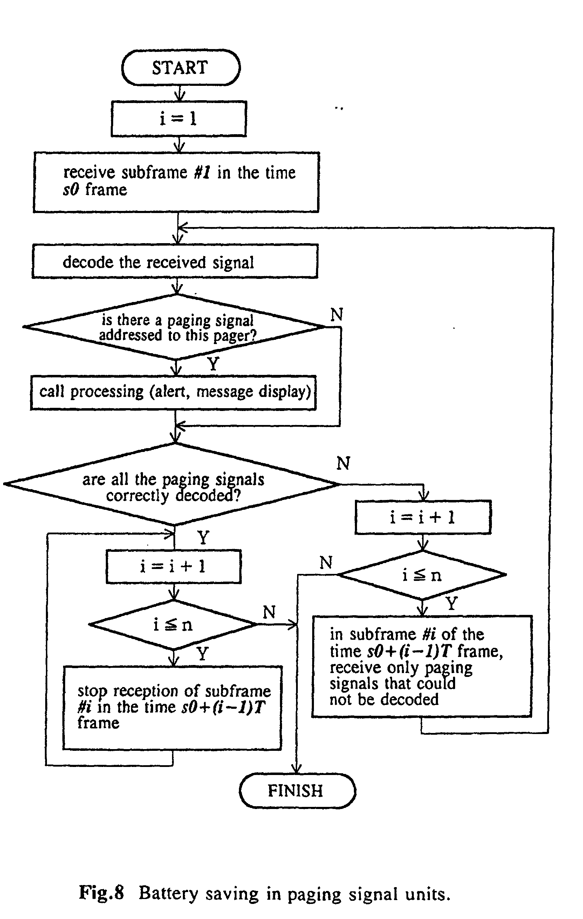

**Fig.8** is a flowchart showing the receiving operation when battery saving is performed in paging signal units. When the first subframe in the time ***s0*** frame is received following the frame synchronization signal, decoder 23 decodes the code words contained in this subframe. If a paging signal addressed to the pager in question was present, call processing (sending an alert and displaying a message) is carried out. If there is a paging signal which cannot be correctly decoded, the same signal position of the corresponding subframe in the next frame is received and its code words decoded, and if there is a paging signal for the pager in question, call processing (sending an alert and displaying a message) is carried out. This is repeated, and when all the paging signals can be correctly decoded, receiving of corresponding subframes in subsequent frames is stopped.

This case is similar to battery saving in subframe units in that in each frame, after the first subframe has been completely received, battery saving operation relating to the paging signals in said first subframe is started, and reception of each paging signal in the second and subsequent subframes is performed on the basis of the outcome of reception in the preceding frames.

In this example, the decision as to whether or not there is a call addressed to a given pager is made when the corresponding paging signal has been correctly decoded, but it is also feasible to store correctly decoded paging signals in memory 25 and to perform said decision at the point in time when all the paging signals of a subframe have been correctly decoded, or when, although there are still some paging signals which have not been correctly decoded, ***n*** receptions have been completed.

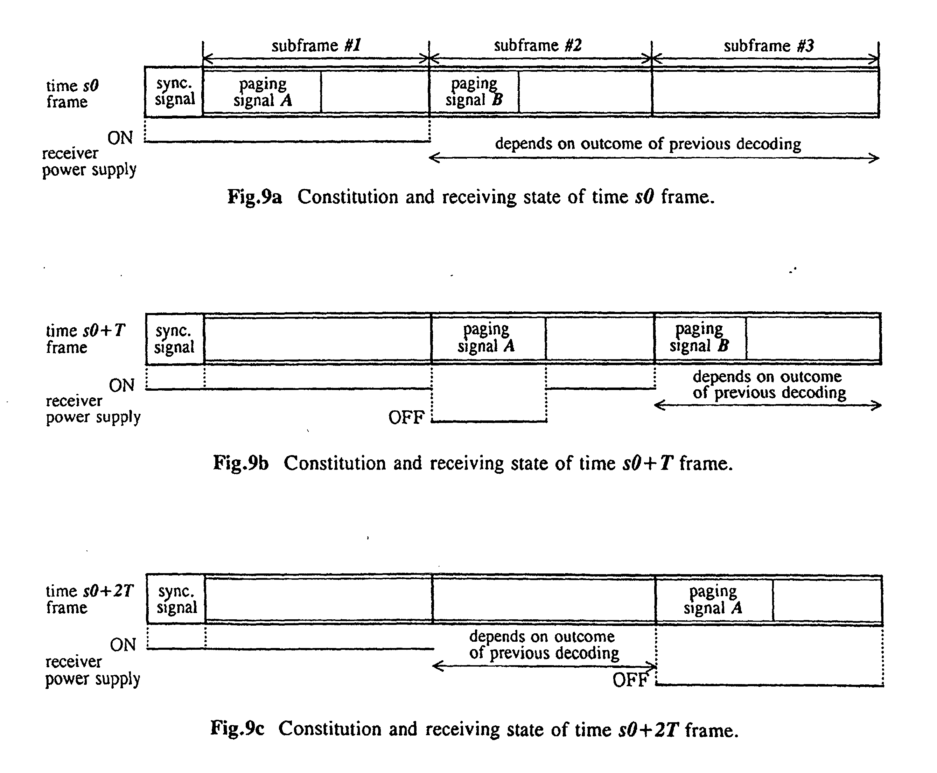

In similar fashion to **Figs.7a, 7b** and **7c, Figs.9a, 9b** and **9c** show the relation between receiving state and constitution of the time ***s0, s0+T*** and ***s0+2T*** frames for the case where ***n*=3.** The frame constitution used here is the same as the one illustrated in **Figs.7a, 7b** and **7c.**

The pager receives the first subframe in the time ***s0*** frame. The explanation given here will focus on subframes in which paging signal ***A*** has been inserted, and it will be assumed that paging signal ***A*** contained in the first subframe has been correctly decoded. If this paging signal ***A*** is a paging signal addressed to the pager in question, the pager carries out call processing. In the time ***s0*+*T*** frame, a synchronization signal for maintaining synchronization is received and reception is stopped with a timing corresponding to paging signal ***A*** contained in the second subframe. Similarly, in the time ***s0*+*2T*** frame, after the synchronization signal for maintaining synchronization has been received, reception is stopped with a timing corresponding to paging signal ***A.*** Accordingly, once decoding has been carried out correctly, it is not necessary to decode the same signal again, as was previously required, with the result that unnecessary consumption of power is avoided.

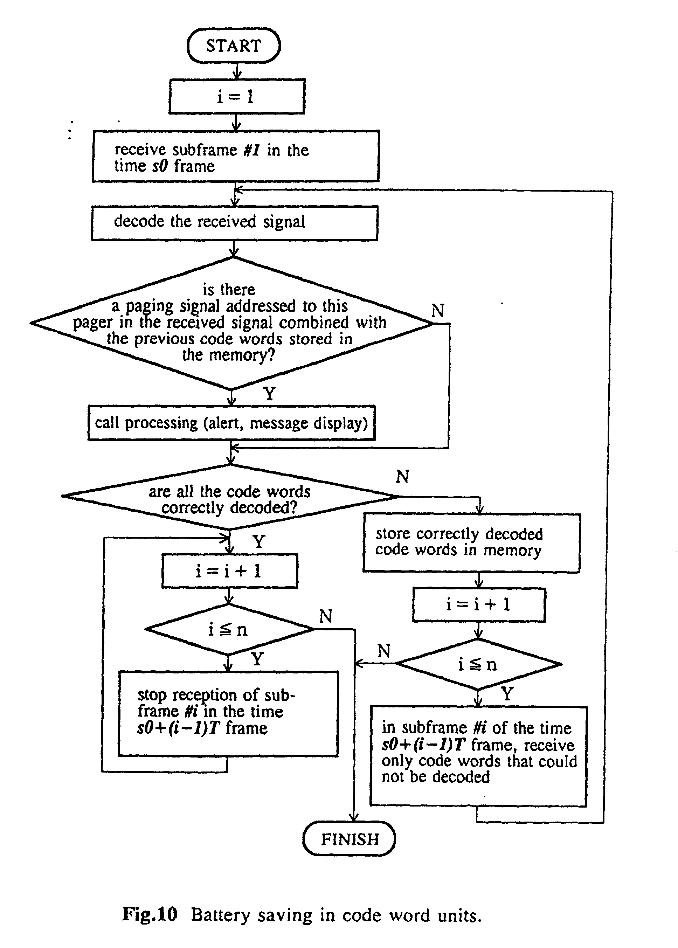

**Fig.10** is a flowchart showing the receiving operation when battery saving is performed in code word units. Apart from the fact that the units of battery saving are code words, this operation is the same as when the units are paging signals. When the first subframe in the time ***s0*** frame is received following the frame synchronization signal, decoder 23 decodes the code words contained in this subframe. If there has been a paging signal addressed to the pager in question, call processing (sending an alert and displaying a message) is carried out. If there are code words which could not be correctly decoded, any correctly decoded code words are stored in memory 25, the same signal positions of the corresponding subframe in the next frame are received, and the code words in those positions are decoded and combined with the previous code words stored in memory 25, whereupon it is decided whether or not there is a paging signal addressed to the pager in question. If there has been a paging signal for the pager in question, call processing (sending an alert and displaying a message) is carried out. This is repeated, and when all the code words have been correctly decoded, reception of corresponding subframes in subsequent frames is stopped.

In this example, the decision as to whether or not there is a call addressed to a given pager is made when the relevant code words have been correctly decoded, but it is also feasible to store correctly decoded code words in memory 25 and to perform said decision at the point in time when all the code words of a subframe have been correctly decoded, or when, although there are still some code words which have not been correctly decoded, ***n*** receptions have been completed.

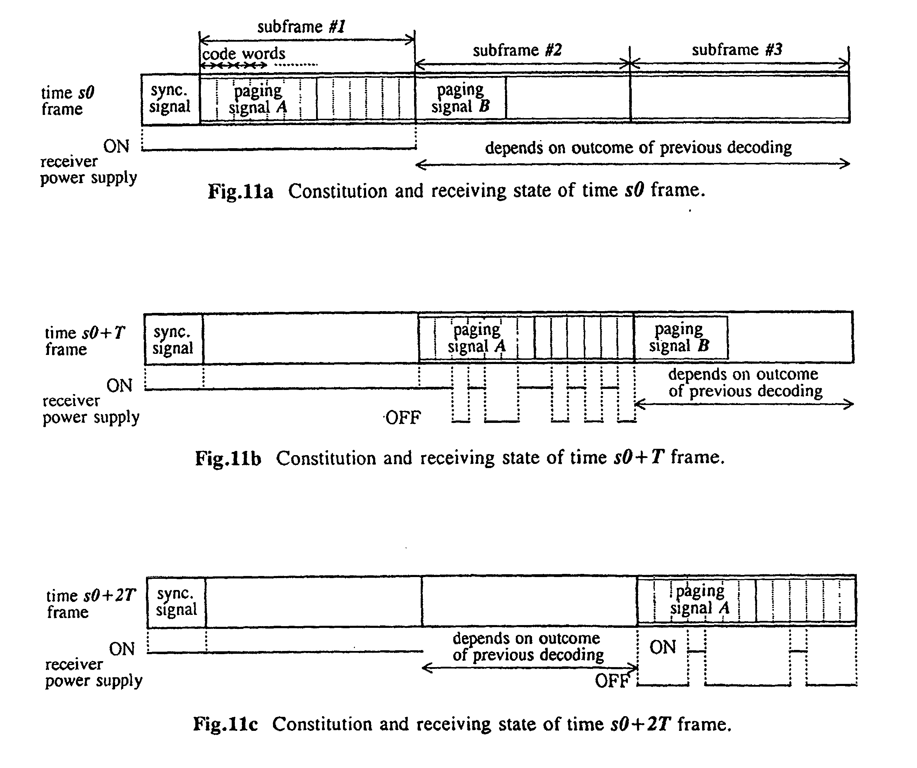

In similar fashion to **Figs.7a, 7b and 7c, Figs.11a, 11b** and **11c** show the relation between receiving state and constitution of the time ***s0, s0+T*** and ***s0+2T*** frames for the case where ***n*=3**. The frame constitution used here is the same as the one illustrated in **Figs.7a, 7b** and **7c.**

The pager receives the first subframe in the time ***s0*** frame. The explanation given here will focus on subframes in which paging signal ***A*** has been inserted, and it will be assumed that several code words contained in the first subframe have been correctly decoded. In this case, in the time ***s0*+*T*** frame, a synchronization signal for maintaining synchronization is received and reception is stopped with a timing corresponding to the correctly decoded code words contained in the second subframe. Similarly, in the time ***s0*+*2T*** frame, after the synchronization signal for maintaining synchronization has been received, reception is stopped with a timing corresponding to the correctly received code words. Accordingly, once decoding has been carried out correctly, it is not necessary to decode the same codes again, as was previously required, with the result that unnecessary power consumption is avoided.

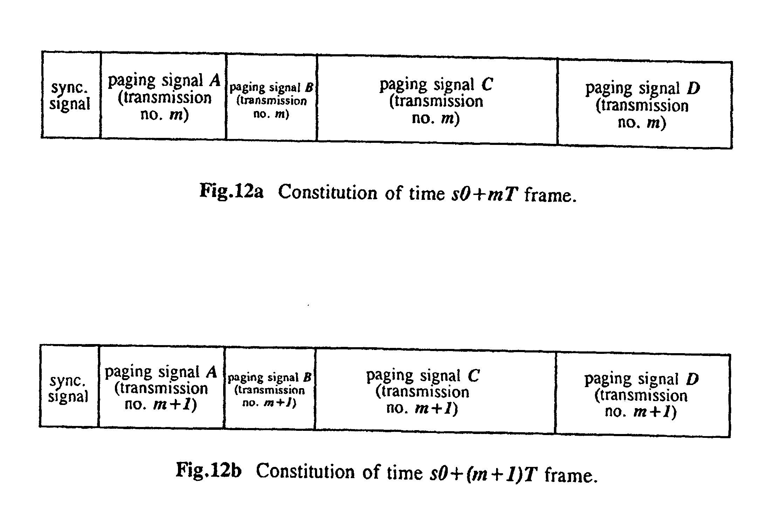

In the foregoing embodiments, explanations were given of cases in which frames were divided into fixed-length subframes, but this invention can also be implemented using other frame constitutions. **Fig.12a** and **Fig.12b** show an example of such an alternative frame constitution. **Fig.12a** shows the constitution of a time ***s0*+*mT*** frame, while **Fig.12b** shows the constitution of a time ***s0+(m+1)T*** frame. In this example, a frame comprising the same combination of a plurality of paging signals is transmitted ***n*** times. Because the position of the paging signals does not change over ***n*** frames, the position of each individual paging signal can easily be inferred despite the fact that the paging signals are of different lengths.

Furthermore, it is by no means essential to provide a synchronization signal in each frame. For example, a synchronization signal may be provided every plural number of frames. This invention can likewise be implemented when the address and message of the paging signals are arranged in separate fields: for example, if the addresses of a plurality of paging signals are brought together and arranged in a single field, and if the messages of the paging signals are arranged in a field following this, in correspondence with the position of the addresses.

## Claims

1. A mobile radio communication system which has a plurality of receivers to each of which an address has been assigned; and a base station which transmits a paging signal ***n*** time, where ***n*** is a predetermined integer equal to or greater than 2, to a receiver which is to be called; said paging signal containing address information corresponding to that receiver; and wherein check bits for carrying out error detection or correction are added to the aforementioned paging signals, and the aforementioned receiver has a means which uses the check bits contained in the received paging signals to perform error detection or correction of those paging signals;
and which is **characterised in that**:
the position of a paging signal that is transmitted for the second or subsequent time is determined, in accordance with a prearranged rule, in relation to the position of the same paging signal when it was transmitted for the first time; and
the aforementioned receiver includes a means which, in respect of signal portions that have been confirmed as having been received without error, stops the receiving operation of the receiver with a timing corresponding to identical signal portions of the same repeatedly received paging signal.

2. A mobile radio communication system as set forth in Claim 1, wherein:
the unit of transmission from the aforementioned base station is a frame containing one or more paging signals;
identical paging signals are transmitted repeatedly by means of ***n*** frames; and
the position of identical paging signals within the frames can be determined by means of a prearranged rule.

3. A mobile radio communication system as set forth in Claim 2, wherein:
each frame is composed of ***n*** fixed-length subframes;
one or more new paging signals are inserted in the first subframe of a frame;
one or more paging signals which are being transmitted for the ***m***^{***th***} time are inserted in the ***m***^{*th*} subframe of a frame; and
the aforementioned means which stops the receiving operation comprises a subframe reception stopping means which, when it has been confirmed that the signal of the ***i***^{***th***} subframe in a given frame has been received without error in that frame or in a previous frame, stops the receiving operation for the ***i*+*1***^{***th***} subframe in the next frame.

4. A mobile radio communication system as set forth in Claim 2, wherein:
each frame is composed of ***n*** fixed-length subframes;
one or more new paging signals are inserted in the first subframe of a frame;
one or more paging signals which are being transmitted for the ***m***^{***th***} time are inserted in the ***m***^{***th***} subframe of a frame; and
the aforementioned means which stops the receiving operation comprises a paging signal reception stopping means which, when it has been confirmed for an individual paging signal of the ***i***^{***th***} subframe in a given frame that that paging signal has been received without error in that frame or in a previous frame, stops the receiving operation for that paging signal in the ***i*+*1***^{***th***} subframe of the next frame.

5. A mobile radio communication system as set forth in Claim 2, wherein:
each frame is composed of ***n*** fixed-length subframes;
one or more new paging signals are inserted in the first subframe of a frame;
one or more paging signals which are being transmitted for the ***m***^{***th***} time are inserted in the ***m***^{***th***} subframe of a frame; and
the aforementioned means which stops the receiving operation comprises a code word reception stopping means which, when it has been confirmed for the smallest code word in the ***i***^{***th***} subframe of a given frame for which error detection or correction can be carried out by means of a series of check bits, that that code word has been received without error in that frame or in a previous frame, stops the receiving operation for that code word of the ***i*+*1***^{***th***} subframe in the next frame.

6. A mobile radio communication system as set forth in any of Claims 1 to 5, wherein the aforementioned receiver is a receive-only pager.

7. A selective radio paging system which uses a mobile radio communication system as set forth in any of Claims 1 to 5.

8. A receiver of a mobile radio communication system which has:
a number storage means (24) which stores the address which has been assigned to said receiver;
a receiving means (20) which receives paging signals which a base station transmits ***n*** times, where ***n*** is a predetermined integer equal to or greater than 2;
a means (23) which uses check bits contained in the received paging signals to perform error detection or correction of those paging signals; and
a means which performs call processing (23) when the address information contained in a received paging signal matches the address that has been stored in the aforementioned number storage means (24);
and which is **characterised in that**:
the position of a paging signal that is received for the second or subsequent time can be predicted from the position of the same paging signal when it was received for the first time; and
there is provided a means (29) which, in respect of signal portions which have been confirmed as having been received without error, stops the receiving operation of the receiver with a timing corresponding to identical signal portions of the same repeatedly received paging signal.

## Patentansprüche

1. Mobiles Funkkommunisationssystem mit einer Vielzahl von Empfängern, denen jeweils eine Adresse zugeordnet ist, und einer Basisstation, die ein Funkrufsignal n-mal, wobei n eine vorbestimmte ganze Zahl ist, die gleich oder größer als 2 ist, an einen anzurufenden Empfänger sendet, wobei das Funkrufsignal eine Adresseninformation aufweist, die dem Empfänger entspricht, und wobei den erwähnten Funkrufsignalen Prüfbits zur Durchführung einer Fehlerfeststellung oder -korrektur zugesetzt sind und der erwähnte Empfänger ein Mittel aufweist, das die in den empfangenen Funkrufsignalen enthaltenen Prüfbits zur Durchführung einer Fehlerfeststellung oder -korrektur dieser Funkrufsignale benutzt, **dadurch gekennzeichnet, daß** die Position eines Funkrufsignals, das zum zweitenmal oder danach gesendet worden ist, nach einer vorbestimmten Regel relativ zu der Position des gleichen Funkrufsignals, wenn es zum erstenmal gesendet wurde, bestimmt wird, und daß der erwähnte Empfänger ein Mittel aufweist, das in bezug auf Signalteile, die als fehlerfrei empfangen bestätigt wurden, die Empfangsoperation des Empfängers zu einem Zeitpunkt anhält, der den identischen Signalteilen des gleichen wiederholt empfangenen Funkrufsignals entspricht.

2. Mobiles Funkkommunikationssystem nach Anspruch 1, bei dem die Einheit einer Sendung der erwähnten Basisstation ein Rahmen ist, der ein oder mehrere Funkrufsignale enthält, identische Funkrufsignale wiederholt mittels n Rahmen gesendet werden und die Position identischer Funkrufsignale in den Rahmen nach einer vorbestimmten Regel bestimmt werden kann.

3. Mobiles Funkkommunikationssystem nach Anspruch 2, bei dem jeder Rahmen aus n Teilrahmen fester Länge zusammengesetzt ist, ein oder mehrere neue Funkrufsignale in dem ersten Teilrahmen eines Rahmens eingesetzt sind, ein oder mehrere Funkrufsignale, die zum m-tenmal gesendet werden, in dem m-ten Teilrahmen eines Rahmens eingesetzt sind und das erwähnte Mittel, das die Empfangsoperation anhält, ein Teilrahmenempfangsanhaltemittel aufweist, das, wenn bestätigt worden ist, daß das Signal des i-ten Teilrahmens in einem bestimmten Rahmen oder in einem vorhergehenden Rahmen fehlerfrei empfangen wurde, die Empfangsoperation für den (i+1)-ten Teilrahmen im nächsten Rahmen anhält.

4. Mobiles Funkkommunikationssystem nach Anspruch 2, bei dem jeder Rahmen aus n Teilrahmen fester Länge zusammengesetzt ist, ein oder mehrere neue Funkrufsignale in den ersten Teilrahmen eines Rahmens eingesetzt sind, ein oder mehrere Funkrufsignale, die zum m-tenmal gesendet werden, im m-ten Teilrahmen eines Rahmens eingefügt sind und das erwähnte Mittel, das die Empfangsoperation anhält, ein Funkrufsignalempfangsanhaltemittel aufweist, das, wenn bei einem einzelnen Funkrufsignal des i-ten Teilrahmens in einem bestimmten Rahmen bestätigt worden ist, däß das Funkrufsignal fehlerfrei in dem Rahmen oder in einem früheren Rahmen empfangen worden ist, die Empfangsoperation für dieses Funkrufsignal im (i+1)-ten Teilrahmen des nächsten Rahmens anhält.

5. Mobiles Funkkommunikationssystem nach Anspruch 2, bei dem jeder Rahmen aus n Teilrahmen fester Länge zusammengesetzt ist, ein oder mehrere neue Funkrufsignale in dem ersten Teilrahmen eines Rahmens eingesetzt sind, ein oder mehrere Funkrufsignale, die zum m-tenmal gesendet werden, in dem m-ten Teilrahmen eines Rahmens eingesetzt sind und das erwähnte Mittel, das die Empfangsoperation anhält, ein Codewortempfangsanhaltemittel aufweist, das, wenn bei dem kleinsten Codewort in dem i-ten Teilrahmen eines bestimmten Rahmens, bei dem eine Fehlerfeststellung oder -korrektur mittels einer Folge von Prüfbits ausgeführt werden kann, bestätigt worden ist, daß das Codewort fehlerfrei ein dem Rahmen oder in einem früheren Rahmen empfangen wurde, die Empfangsoperation bei diesem Codewort des (i+1)-ten Teilrahmens im nächsten Rahmen anhält.

6. Mobiles Funkkommunikationssystem nach einem der Ansprüche 1 bis 5, bei dem der erwähnte Empfänger ein Nur-Personenruf-Empfänger ist.

7. Selektives Funkrufsignalsystem, bei dem ein mobiles Funkkommunikationssystem nach einem der Ansprüche 1 bis 5 angewandt wird.

8. Empfänger eines mobiles Funkkommunikationssystems, der aufweist:
ein Nummernspeichermittel (24), das die Adresse speichert, die dem Empfänger zugeordnet ist;
ein Empfangsmittel (20), das Funkrufsignale empfängt, die eine Basisstation n-mal aussendet, wobei n eine vorbestimmte ganze Zahl ist, die gleich oder größer als 2 ist;
ein Mittel (23), das in den empfangenen Funkrufsignalen enthaltene Prüfbits zur Durchführung einer Fehlerfeststellung oder -korrektur bei den Funkrufsignalen benutzt; und
ein Mittel, das eine Rufverarbeitung (23) durchführt, wenn die in einem Funkrufsignal enthaltene Adresseninformation mit der Adresse übereinstimmt, die in dem erwähnten Nummernspeichermittel (24) gespeichert wurde;
**dadurch gekennzeichnet, daß**:
die Position eines Funkrufsignals, das zum zweitenmal oder danach empfangen worden ist, anhand der Position des gleichen Funkrufsignals vorhergesagt werden kann, das zum erstenmal empfangen wurde; und
ein Mittel (29) vorgesehen ist, das in bezug auf Signalteile, die als fehlerfrei empfangen bestätigt worden sind, die Empfangsoperation des Empfängers zu einem Zeitpunkt anhält, der identischen Signalteilen desselben wiederholt empfangenen Rufsignals entspricht.

## Revendications

1. Système mobile de radiocommunication qui présente plusieurs récepteurs à chacun desquels une adresse a été assignée; et une station de base qui transmet *n* fois un signal de recherche de personne (où *n* est un nombre entier prédéterminé égal ou supérieur à 2), vers un récepteur qui doit être appelé; ledit signal de recherche de personne contenant une information d'adresse correspondant à ce récepteur; et dans lequel des bits de contrôle pour la mise en oeuvre d'une détection ou d'une correction d'erreur sont ajoutés aux signaux susmentionnés de recherche de personne, et le récepteur susmentionné possède un moyen qui utilise les bits de contrôle contenus dans les signaux de recherche de personne reçus, pour effectuer une détection ou une correction d'erreur de ces signaux de recherche de personne;
et qui est **caractérisé en ce que**:
la position d'un signal de recherche de personne qui est transmis pour la seconde fois ou les suivantes est prédéterminée, conformément à une règle préétablie, en relation avec la position du même signal de recherche de personne lorsqu'il était transmis pour la première fois; et
le récepteur susmentionné comprend un moyen qui, eu égard aux parties de signal qui ont été confirmées comme ayant été reçues sans erreurs, arrête l'opération de réception du récepteur avec un rythme correspondant à des parties de signal identiques du même signal de recherche de personne reçu de manière répétitive.

2. Système mobile de radiocommunication selon la revendication 1, dans lequel:
l'unité de transmission provenant de la station de base susmentionnée est une trame de données contenant un ou plusieurs signaux de recherche de personne;
des signaux de recherche de personne identiques sont transmis de manière répétitive au moyen de n trames de données; et
la position de signaux de recherche de personne identiques à l'intérieur des trames de données peut être déterminée au moyen d'une règle préétablie.

3. Système mobile de radiocommunication selon la revendication 2, dans lequel:
chaque trame de données est composée de n sous-trames de longueurs fixes;
un ou plusieurs nouveaux signaux de recherche de personne sont insérés dans la première sous-trame d'une trame de données;
un ou plusieurs signaux de recherche de personne qui sont en cours de transmission pour la *m*^{me} fois sont insérés dans la *m*^{me} sous-trame d'une trame de données; et
le moyen susmentionné, qui arrête l'opération de réception, comprend un moyen d'arrêt de la réception de la sous-trame qui, lorsqu'il a été confirmé que le signal de la *i*^{me} sous-trame dans une trame de données déterminée a été reçu sans erreur dans cette trame de données ou dans une trame de données précédente, arrête l'opération de réception pour la *i+1*^{me} sous-trame dans la trame de données suivante.

4. Système mobile de radiocommunication selon la revendication 2, dans lequel:
chaque trame de données est composée de *n* sous-trames de longueur fixe;
un ou plusieurs nouveaux signaux de recherche de personne sont insérés dans la première sous-trame d'une trame de données;
un ou plusieurs signaux de recherche de personne qui sont en cours de transmission pour la *m*^{me} fois sont insérés dans la *m*^{me} sous-trame d'une trame de données; et
le moyen susmentionné, qui arrête l'opération de réception, comprend un moyen d'arrêt de la réception du signal de recherche de personne qui, lorsqu'il a été confirmé pour un signal individuel de recherche de personne de la *i*^{me} sous-trame dans une trame de données déterminée, que ce signal de recherche de personne a été reçu sans erreur dans cette trame de données ou dans une trame de données précédente, arrête l'opération de réception pour ce signal de recherche de personne dans la *i*+*1*^{me} sous-trame de la trame de données suivante.

5. Système mobile de radiocommunication selon la revendication 2, dans lequel:
chaque trame de données est composée de *n* sous-trames de longueurs fixes;
un ou plusieurs nouveaux signaux de recherche de personne sont insérés dans la première sous-trame d'une trame de données;
un ou plusieurs signaux de recherche de personne qui sont en cours de transmission pour la *m*^{me} fois sont insérés dans la *m*^{me} sous-trame d'une trame de données; et
le moyen susmentionné, qui arrête l'opération de réception, comprend un moyen d'arrêt de la réception de mot codé qui, lorsqu'il a été confirmé pour le plus petit mot codé dans la *i*^{me} sous-trame d'une trame de données déterminée pour laquelle une détection ou une correction d'erreur peut être effectuée au moyen d'une série de bits de contrôle, que ce mot codé a été reçu sans erreur dans cette trame de données ou dans une trame de données précédente, arrête l'opération de réception pour ce mot codé de la *i+1*^{me} sous-trame dans la trame de données suivante.

6. Système mobile de radiocommunication selon l'une quelconque des revendications 1 à 5, dans lequel le récepteur susmentionné est un téléavertisseur qui ne fonctionne qu'en réception.

7. Système de radiorecherche sélective de personne qui utilise un système mobile de radiocommunication selon l'une quelconque des revendications 1 à 5.

8. Récepteur d'un système mobile de radiocommunication qui possède:
un moyen (24) de mémorisation de nombres, qui mémorise l'adresse qui a été assignée audit récepteur;
un moyen (20) de réception, qui reçoit des signaux de recherche de personne qu'une station de base transmet *n* fois (où *n* est un nombre entier prédéterminé égal ou supérieur à 2);
un moyen (23) qui utilise des bits de contrôle contenus dans les signaux de recherche de personne reçus, pour effectuer une détection ou une correction d'erreur de ces signaux de recherche de personne; et
un moyen qui effectue le traitement (23) de l'appel lorsque l'information d'adresse contenue dans un signal de recherche de personne reçu est égale à l'adresse qui a été mémorisée dans le moyen (24) susmentionné de mémorisation d'un nombre;
et qui est **caractérisé en ce que**:
la position d'un signal de recherche de personne qui est reçu pour la seconde fois ou les suivantes peut être prédite à partir de la position du même signal de recherche de personne lorsqu'il était reçu pour la première fois; et
il est prévu un moyen (29) qui, eu égard aux parties de signal qui ont été confirmées comme ayant été reçues sans erreur, arrête l'opération de réception du récepteur avec un rythme correspondant à des parties de signal identiques du même signal de recherche de personne reçu de manière répétitive.
